# EUROPEAN PATENT APPLICATION

(11) **EP 4 818 633 A1**
(43) Date of publication of application: **07.10.2026**
(21) Application number: 26164315.9
(22) Date of filing: 12.03.2026
(51) Int. Cl.: F42B 33/02

(54) **EXTRUDING DEVICE FOR FILLING A SHELL BODY WITH AN EXPLOSIVE**

(30) Priority: 02.04.2025 CZ 20250130
(71) Applicant: Konstrukta - Industry, akciova spolocnost, 912 50 Trencin (SK)
(72) Inventor: Pajtina, Rudolf, 911 01 Trencin (SK)
(74) Representative: Andera, Jiri

(57) **Abstract**

An extruding device (1) for filling the shell body (5) with an explosive, comprising a chamber (2) with a hopper (16), and a screw (3), fitted with an drive (4), is arranged in the chamber (2). The screw (3) is insertable into the opening of the tip of the shell body (5), and at the opposite end, the shell body (5) bears on a piston rod (12) of a piston (13) of a pressing cylinder (6), to control the magnitude of the pressing force, the space under the piston (13) being connectable to a proportional pressure relief valve (7) on the one hand, and a source (14) of pressure on the other hand wherein a throttling element is arranged between the space under the piston (13) and the source (14) of pressure. An electronic position sensor (9) is arranged to detect movement of the shell body (5) the output of which is connected to a control system (10). A first pressure sensor (8) connected to the control system (10) is applied to the space under the piston (13) and the control system (10) is interconnected with the proportional pressure relief valve (7) through the first control unit (11) and the proportional pressure relief valve (7) is connected to the tank line (15).

## Description

### Technical field

The invention relates to an extruding device for filling the shell body with an explosive, comprising a chamber with a hopper, and a screw, fitted with a drive, is arranged in the chamber wherein the screw is insertable into the opening of the tip of the shell body, and at the opposite end, the shell body bears on the piston rod of the piston of a pressing cylinder, to control the magnitude of the pressing force, the space under the piston being connectable to a proportional pressure relief valve on the one hand, and a source of pressure on the other hand wherein a throttling element is arranged between the space under the piston and source of pressure.

### Background art

To fill ammunition with trinitrotoluene or other explosives, extruding devices called screw extruders are used that are configured both horizontally and vertically, where the filled explosive is gradually pressed into the shell cavity with the use of a screw.

During the filling of ammunition with the use of a screw the filled material exerts a force that tries to push the shell body down from the screw. In the application, this force is referred to as a pressing force. The density and quality of the filled explosive charge can be controlled and checked by controlling the magnitude of this force.

The filling process is controlled by adjusting the pressing pressure, which ensures a controlled movement of the shell body that is subject to being pushed down from the screw by the pressing force. The pressing force is controlled depending on the position of the screw end with respect to the shell cavity.

In the prior art, a hydraulic system is used to control the pressing pressure, the system employing a mechanically controlled pressure relief valve that is controlled by a mechanical template, connected to the shell, so a movement of the shell also causes movement of the mechanical template.

Such a system is reliable; however, any change requires a new template to be produced, which represents a lengthy process. Similarly, adjustment can only be implemented mechanically by shifting the mutual positions of the valve and template.

The goal of the invention is to propose such an extrusion device for filling the shell body with an explosive that would not exhibit the shortcomings of the prior art.

### Summary of the invention

The said goal is achieved with an extruding device for filling the shell body with an explosive, comprising a chamber with a hopper, and a screw, fitted with an drive, is arranged in the chamber wherein the screw is insertable into the opening of the tip of the shell body, and at the opposite end, the shell body bears on the piston rod of the piston of a pressing cylinder, to control the magnitude of the pressing force, the space under the piston being connectable to a proportional pressure relief valve on the one hand, and a source of pressure on the other hand wherein a throttling element is arranged between the space under the piston and source of pressure, according to the invention the principle of which is that an electronic position sensor is arranged to detect movement of the shell body the output of which is connected to the control system. The first pressure sensor connected to the control system is applied to the space under the piston. The control system is interconnected with the proportional pressure relief valve. The proportional pressure relief is connected to the tank line of hydraulic system.

An advantage of the device according to the invention is that in case the set pressing pressure value is exceeded, it makes it possible to drain hydraulic liquid from the space under the piston to the tank line to enable movement of the piston to maintain the pressing force at the required value.

Another advantage of the device according to the invention is quick and operative setting and changing the pressing pressure even during operation of the machine, quick and operative initial setting of the technology, easy changes of settings in case of a production change to another shell type and recording of parameters and the possibility of their later analysis.

In a preferred embodiment, a proportional reducing valve is incorporated between the space under the piston and pressure source, the reducing valve being connected to the second control unit, which is connected to the control system.

In another preferred embodiment, the second pressure sensor, connected to the control system, is attached to the output of the proportional reducing valve.

In another preferred embodiment, a throttling element is installed between the space under the piston and the proportional reducing valve.

In another preferred embodiment, a hydraulic accumulator is arranged before the entry of the space under the piston to dampen hydraulic shocks and dynamic pressure peaks.

In another preferred embodiment, the shell body bears on the piston rod of the piston of the pressing cylinder via a guiding mechanism wherein the shell body is connected to a mechanism for rotating the shell body around the longitudinal axis.

In other preferred embodiments, the axis of the pressing cylinder is coincident with the axis of the shell body, or the axis of the pressing cylinder lies outside the axis of the shell body.

In another preferred embodiment, the throttling element is an orifice.

### Brief Description of Drawings

The invention will be clarified in a more detailed way with reference to embodiment examples of the extrusion device according to the invention, schematically shown in the drawings where individual figures represent:
Fig. 1 the first embodiment example of an extruding device for filling the shell body with an explosive according to the invention
Fig. 2 the second embodiment example of an extruding device for filling the shell body with an explosive according to the invention
Fig. 3 an embodiment example of the guiding mechanism and mechanism for rotating the shell body, arranged between the shell body and the piston rod of the piston of the pressing cylinder

### Examples of embodiments of the invention

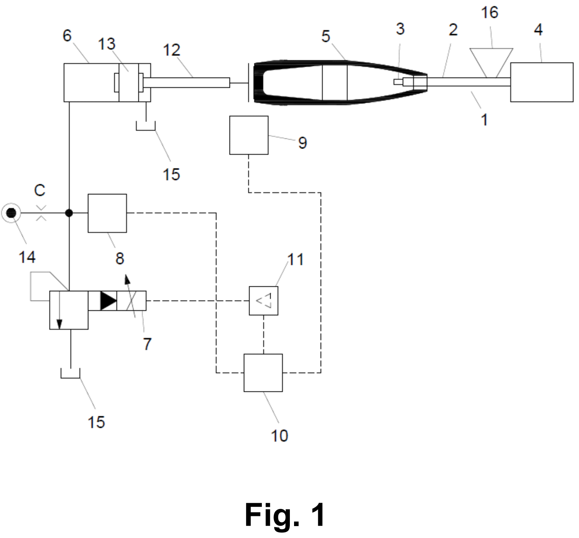

The extruding device 1 of Fig. 1 is used to fill the shell body 5 with an explosive, for instance trinitrotoluene. The extruding device 1 has a chamber 2 where a screw 3 is mounted that is driven by an drive 4. The explosive is fed to the chamber 2 of the screw 3 from the hopper 16.

The screw 3 is inserted into the opening in the tip of the shell body 5 so that rotation of the screw 3 causes the explosive to be fed into the shell body 5. At the opposite end, the shell body 5 bears on the piston rod 12 of the piston 13, which protrudes from the pressing cylinder 6. The space under the piston 13, i.e. at the side averted from the piston rod 12, is connectable to the proportional pressure relief valve 7 and the pressure source 14 to control the magnitude of the pressing force. Between the space under the piston 13 and the pressure source 14, a throttling element is arranged, which is an orifice C in the example shown.

During the filling of the shell body 5, the fed explosive pushes the shell body 5 down from the screw with a force that is referred to as the pressing force. The resulting movement of the shell body 5 is detected by an electronic position sensor 9, which detects the movement of the piston rod 12 of the piston 13 of the pressing cylinder 6. Skilled persons will find it obvious that the electronic position sensor 9 can directly detect the shell body 5.

The output of the electronic position sensor 9 is provided to the control system 10, which may be for instance a PLC system, industrial computer, smart relay and the like. The control system 10 is interconnected with a pressure sensor 8, which measures pressure in the space under the piston 13 of the pressing cylinder 6. The control system 10 is coupled with the first control unit 11. The proportional pressure relief valve 7 is also interconnected with the first control unit 11.

The first control unit 11 converts the signal from the control system 10 to the readjustment signal for the proportional pressure relief valve 7. This first control unit 11 may be either arranged separately as shown in Fig. 1, or it may be part of the proportional pressure relief valve 7 (valve with integrated electronic equipment).

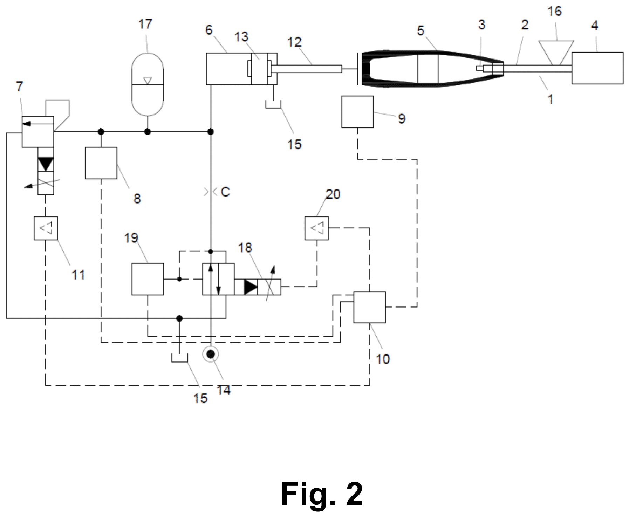

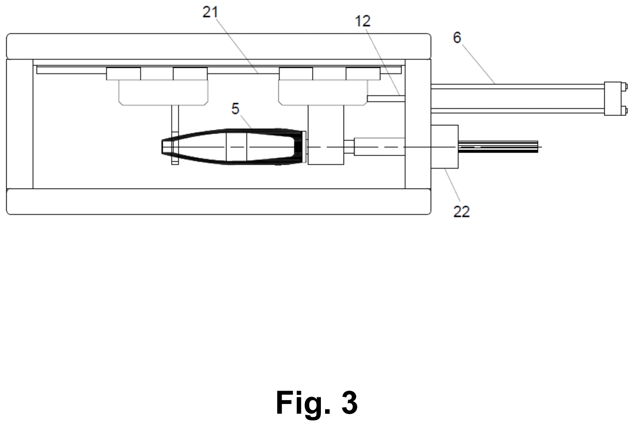

The shell body 5 bears on the piston rod 12 of the piston 13 of the pressing cylinder 6 either directly (see Figs. 1 and 2), or via a guiding mechanism 21 (see Fig. 3). The shell body 5 is connected to a mechanism 22 to rotate the shell body 5 around the longitudinal axis, shown in detail in Fig. 3.

In Figs. 1 and 2, the axis of the pressing cylinder 6 is coincident with the axis of the shell body 5. However, in an embodiment that is not shown here, the axis of the pressing cylinder 6 may not be coincident with the axis of the shell body 5.

The density and quality of explosive charge of the shell body 5 with the explosive is governed by controlling the pressing force. Based on information about the current position of the shell body 5 from the position sensor 9, the control system 10 calculates the required pressing pressure according to a preset algorithm, and sends the required value to the first control unit 11 for setting the pressing pressure.

The pressing pressure is set by the proportional pressure relief valve 7. The pressure is monitored by the pressure sensor 8, which sends the current value of pressure to the control system 10. Based on PID control, the control system 10 corrects the settings of the proportional pressure relief valve 7 through the first control unit 11 to make the actual detected pressure value approximate the desired value for the given position of the shell body 5 as much as possible.

The control system 10 is configured to use the proportional pressure relief valve 7 to control the pressing pressure of the pressing cylinder 6 based on the required value of the pressing pressure. The control system 10 receives feedback about the current value of the pressing pressure from the pressure sensor 8.

If the required value of pressing pressure is exceeded, the proportional pressure relief valve 7 will drain the required amount of the working liquid to the tank line 15, which will enable movement of the piston 13 and maintaining the required value of the pressing pressure.

In addition to the elements according to the embodiment of Fig. 1, the embodiment example of the extrusion device of Fig. 2 has a proportional reducing valve 18 connected to the second control unit 20, which is interconnected with the control system 10, the reducing valve being installed between the space under the piston 13 and the pressure source 14.

In the embodiment of Fig. 2, the second pressure sensor 19, interconnected with the control system 10, is connected to the output of the proportional reducing valve 18.

Before the entry of the space under the piston 13 of the pressing cylinder 6, a hydraulic accumulator 17 is arranged to dampen hydraulic shocks and dynamic pressure peaks.

An orifice C is inserted between the space under the piston 13 and the proportional reducing valve 18.

In the same manner as in the embodiment of Fig. 1, the pressing pressure is adjusted by the proportional pressure relief valve 7. The pressure is detected by the pressure sensor 8, which returns the current pressure value to the control system 10. Based on PID control, the first control unit 11 corrects the setting of the proportional pressure relief valve 7 in such a way to make the actual detected pressure value approximate the required value for the given position of the shell body 5 as much as possible.

The compensation pressure is set by the proportional reducing valve 11. Pressure is measured by the second pressure sensor 19, which returns the current pressure value to the control system 10. The compensation pressure is a stabilizing element of the system that supplies the hydraulic system with a small amount of the working liquid to maintain a permanent minimum flow through the proportional pressure relief valve 7. This flow is fixed by the orifice C installed in the hydraulic system between the space under the piston 13 and the proportional reducing valve 18. A skilled person in the art will find it obvious that another known throttling element can be used instead of the orifice C. The proportional reducing valve 18 controls the pressure in the hydraulic system to a constant pressure that is equal to the pressing pressure (smoothens pressure overruns) to reduce oscillation of the pressing pressure.

Based on the PID control, the system automatically corrects the settings of the proportional pressure relief valve 7 and the proportional reducing valve 18 in such a way as to make the actual detected value approximate the required pressing pressure value for the given position of the shell body 5 as much as possible.

### List of reference signs

- 1: extruding device
- 2: chamber
- 3: screw
- 4: drive
- 5: shell body
- 6: pressing cylinder
- 7: proportional pressure relief valve
- 8: first pressure sensor
- 9: position sensor
- 10: control system
- 11: first control unit
- 12: piston rod
- 13: piston
- 14: pressure source
- 15: tank line
- 16: hopper
- 17: hydraulic accumulator
- 18: proportional reducing valve
- 19: second pressure sensor
- 20: second control unit
- 21: guiding mechanism
- 22: rotation mechanism
- C: orifice

## Claims

1. An extruding device (1) for filling the shell body (5) with an explosive, comprising a chamber (2) with a hopper (16), and a screw (3), fitted with an drive (4), is arranged in the chamber (2) wherein the screw (3) is insertable into the opening of the tip of the shell body (5), and at the opposite end, the shell body (5) bears on a piston rod (12) of a piston (13) of a pressing cylinder (6), to control the magnitude of the pressing force, the space under the piston (13) being connectable to a proportional pressure relief valve (7) on the one hand, and a source (14) of pressure on the other hand wherein a throttling element is arranged between the space under the piston (13) and the source (14) of pressure, **characterized in that** an electronic position sensor (9) is arranged to detect movement of the shell body (5) the output of which is connected to a control system (10) wherein a first pressure sensor (8) connected to the control system (10) is applied to the space under the piston (13) and the control system (10) is interconnected with the proportional pressure relief valve (7) through the first control unit (11) and the proportional pressure relief valve (7) is connected to the tank line (15).

2. The extruding device (1) according to claim 1, **characterized in that** between the space under the piston (13) and the pressure source (14) a proportional reducing valve (18) is applied that is connected to a second control unit (20), which is connected to the control system (10).

3. The extruding device (1) according to claim 2, **characterized in that** a second pressure sensor (19), connected to the control system (10) is connected to the output of the proportional reducing valve (18).

4. The extruding device (1) according to claim 1, 2 or 3, **characterized in that** a throttling element is inserted between the space under the piston (13) and the proportional reducing valve (18).

5. The extruding device (1) according to claim 1, 2, 3 or 4, **characterized in that** before the entry in the space under the piston (13), a hydraulic accumulator (17) is arranged to dampen hydraulic shocks and dynamic pressure peaks.

6. The extruding device (1) according to claim 1, 2, 3, 4 or 5, **characterized in that** the shell body (5) bears on the piston rod (12) of the piston (13) of the pressing cylinder (6) via a guiding mechanism (21) wherein the shell body (5) is connected to a mechanism (22) to rotate the shell body (5) around the longitudinal axis.

7. The extruding device (1) according to claim 6, **characterized in that** the axis of the pressing cylinder (6) is coincident with the axis of the shell body (5).

8. The extruding device (1) according to claim 6, **characterized in that** the axis of the pressing cylinder (6) lies outside the axis of the shell body (5).

9. The extruding device (1) according to claim 1, 2, 3, 4, 5, 6, 7 or 8, **characterized in that** the throttling element is an orifice (C).
